# FASCICULE DE BREVET EUROPEEN

(11) **EP 3 443 411 B1**
(45) Date de publication et mention de la délivrance du brevet: **29.12.2021**
(21) Numéro de dépôt: 17714481.3
(22) Date de dépôt: 31.03.2017
(51) Int. Cl.: G02F 1/365

(54) **DISPOSITIF DE GÉNÉRATION D'UN FAISCEAU DE PHOTONS DE LONGUEURS D'ONDE DÉFINISSANT UN SUPERCONTINUUM SENSIBLEMENT CONTINU**
VORRICHTUNG ZUR ERZEUGUNG EINES STRAHLS VON PHOTONEN MIT WELLENLÄNGEN, DIE EIN SUBSTANZIELL KONTINUIERLICHES SUPERKONTINUUM DEFINIEREN
DEVICE FOR GENERATING A BEAM OF PHOTONS WITH WAVELENGTHS DEFINING A SUBSTANTIALLY CONTINUOUS SUPERCONTINUUM

(30) Priorité: 13.04.2016 FR 1653252
(43) Date de publication de la demande: 20.02.2019
(73) Titulaire: Centre National de la Recherche Scientifique, 75016 Paris (FR); Université de Limoges, 87000 Limoges (FR)
(72) Inventeur: KRUPA, Katarzyna, 87100 Limoges (FR); SHALABY, Badr, 87100 Limoges (FR); TONELLO, Alessandro, 87000 Limoges (FR); COUDERC, Vincent, 87430 Verneuil-sur-Vienne (FR)
(74) Mandataire: Marks & Clerk France
(86) Numéro de dépôt international: PCT/EP2017/057760
(87) Numéro de publication internationale: WO 2017/178255

(56) Documents cités:
- US-A- 6 097 870
- US-A1- 2012 099 340
- US-A1- 2014 010 497
- JACOB RAMSAY ET AL: "Generation of infrared supercontinuum radiation: spatial mode dispersion and higher-order mode propagation in ZBLAN step-index fibers", OPTICS EXPRESS, vol. 21, no. 9, 25 avril 2013 (2013-04-25) , page 10764, XP055324554, DOI: 10.1364/OE.21.010764
- LOGAN G. WRIGHT ET AL: "Controllable spatiotemporal nonlinear effects in multimode fibres", NATURE PHOTONICS, vol. 9, no. 5, 13 avril 2015 (2015-04-13), pages 306-310, XP055324907, UK ISSN: 1749-4885, DOI: 10.1038/nphoton.2015.61
- V A KAMYNIN ET AL: "Supercontinuum generation in the range 1.6 - 2.4 [mu]m using standard optical fibres", QUANTUM ELECTRONICS., vol. 41, no. 11, 30 novembre 2011 (2011-11-30), pages 986-988, XP055324126, GB ISSN: 1063-7818, DOI: 10.1070/QE2011v041n11ABEH014671
- POURBEYRAM HAMED ET AL: "Stimulated Raman scattering cascade spanning the wavelength range of 523 to 1750 nm using a graded-index multimode optical f", APPLIED PHYSICS LETTERS, A I P PUBLISHING LLC, US, vol. 102, no. 20, 20 mai 2013 (2013-05-20) , pages 201107-201107, XP012173058, ISSN: 0003-6951, DOI: 10.1063/1.4807620 [extrait le 2013-05-21]
- Katarzyna Krupa ET AL: "Spatial beam self-cleaning in multimode fiber", , 9 mars 2016 (2016-03-09), XP55324541, Extrait de l'Internet: URL:https://arxiv.org/ftp/arxiv/papers/160 3/1603.02972.pdf

## Description

### Domaine technique

L'invention concerne les dispositifs chargés de générer un faisceau de photons polychromatique, et les systèmes d'analyse qui utilisent de tels dispositifs.

### État de l'art

Comme le sait l'homme de l'art, dans certains domaines on utilise des sources lasers qui délivrent un faisceau de photons ayant des longueurs d'onde réparties sensiblement continûment sur une largeur spectrale importante, typiquement de quelques dizaines de nanomètres à quelques centaines de nanomètres. C'est notamment le cas dans le domaine de l'analyse d'échantillons (éventuellement médicaux).

Ces sources polychromatiques, fréquemment appelées continua, résultent généralement d'une interaction lumière-matière mettant en œuvre des effets non linéaires. Elles comprennent souvent au moins une source laser impulsionnelle qui délivre des photons « primaires » présentant une longueur d'onde « primaire », et une fibre optique qui est micro-structurée afin de produire, à partir des photons primaires, un faisceau de sortie comprenant des photons secondaires présentant plusieurs longueurs d'onde « secondaires » (qui constituent ensemble un supercontinuum).

Une fibre optique micro-structurée non linéaire est généralement en silice et comprend des micro-structures qui sont destinées à confiner la puissance lumineuse pour augmenter l'interaction lumière-matière et ainsi améliorer la conversion de la longueur d'onde primaire en un grand nombre de longueurs d'onde secondaires. A titre d'exemple, ces micro-structures peuvent constituer un réseau de Bragg qui est transverse à la direction de propagation de la lumière dans la fibre optique et qui est propre à modifier la loi de dispersion vue par la lumière.

Grâce à ces sources à fibre optique micro-structurée on peut obtenir des rayonnements stables avec une largeur spectrale allant du proche ultraviolet (ou UV) (environ 350 nm) jusqu'à l'infrarouge moyen (typiquement 5 µm). Les fibres optiques micro-structurées en silice sont par exemple limitées dans l'infrarouge vers 2,4 µm.

Malheureusement, le cœur de ces fibres optiques micro-structurées présente un faible diamètre. Par conséquent, lorsqu'elles réalisent un fort confinement de l'énergie, le seuil de dommage de leur matériau de cœur est très vite atteint, et donc elles ne permettent pas à leurs sources de délivrer de fortes énergies de sortie. Par ailleurs, lorsque l'on pompe ces fibres optiques micro-structurées dans le domaine de dispersion normal, cela induit une génération non continue du spectre de conversion par effet Raman stimulé, si bien que leur source ne peut pas être considérée comme un véritable continuum.

Il en résulte que ces sources ne peuvent pas être utilisées dans certaines applications, comme par exemple la « micro-spectroscopie CARS multiplex (« Coherent AntiStokes Raman Scattering » - diffusion Raman antistokes cohérente multiplex) », du fait de la non continuité spectrale des rayonnements émis. Il est rappelé que la micro-spectroscopie CARS multiplex est notamment utilisée dans le domaine de l'imagerie et de la spectroscopie pour identifier et localiser des espèces chimiques spécifiques au sein d'un échantillon ou dans un espace ouvert.

Lorsque l'on veut la génération d'un supercontinuum avec une énergie très élevée, on doit utiliser une fibre optique ayant un diamètre de cœur notablement supérieur à celui d'une fibre optique micro-structurée monomode ou quasi monomode. Pour ce faire, on peut utiliser une fibre optique multimode.

Ce dernier type de fibre optique permet de guider des énergies plus importantes mais n'a pas la capacité de modifier fortement la dispersion du guide du fait de sa grande largeur de cœur. Le rayonnement de sortie est également réparti sur plusieurs modes ce qui diminue fortement la brillance du rayonnement de sortie.

Un supercontinuum peut être engendré dans ces fibres optiques grâce notamment au mélange de l'effet Raman et des processus paramétriques. A cause de l'effet Raman et du régime de dispersion, les photons secondaires du supercontinuum sont générés sur des longueurs d'onde qui sont plus élevées que la longueur d'onde primaire (ou de pompe) ce qui rend difficile la génération de longueurs d'onde secondaires dans un domaine spectral inférieur à celui de l'onde de pompe. Pour une longueur d'onde d'excitation située en régime de dispersion normale, les longueurs d'onde du supercontinuum sont engendrées par paquets à cause du profil non continu du gain Raman ce qui n'offre pas une véritable continuité spectrale. Malgré un filtrage modal partiel induit par la conversion Raman, le rayonnement de sortie est également obtenu sur un grand nombre de modes ce qui diminue la brillance et la cohérence spatiale de la source.

Il est connu du document Krupa, K., Tonello, A., Shalaby, B. M., Fabert, M., Barthélémy, A., Millot, G., ... & Couderc, V. (2016). Spatial beam self-cleaning in multimode fiber. arXiv preprint arXiv:1603.02972. de réaliser un nettoyage des photons de longueur d'onde primaire dans le mode fundamental dans une fibre optique multimode de type GRIN.

### Résumé de l'invention

L'invention a notamment pour but d'améliorer la situation en termes de brillance et de continuité spectrale.

Elle propose notamment à cet effet un dispositif, destiné à générer un faisceau de photons polychromatique, et comprenant au moins une source laser impulsionnelle propre à délivrer des photons primaires présentant au moins une longueur d'onde dans un unique mode spatial, des moyens de mise en forme propres à agir sur les photons primaires pour délivrer un faisceau d'entrée, et au moins une fibre optique agencée pour produire un faisceau de sortie polychromatique comprenant des photons secondaires présentant plusieurs longueurs d'onde à partir du faisceau d'entrée.

Ce dispositif de génération se caractérise par le fait que :
- sa source laser impulsionnelle est propre à délivrer les photons primaires dans des impulsions ayant une forte énergie de pompe, et
- chaque fibre optique présente au moins dix modes, dont un dit fondamental et entre lesquels est initialement répartie l'énergie de pompe des photons primaires, et est propre à relocaliser cette énergie de pompe par effet Kerr dans le mode fondamentalavant de générer les photons secondaires de différentes longueurs d'onde par conversions de longueurs d'onde à partir de la longueur d'onde des photons primaires qui sont dans le mode fondamental.

Ainsi, en utilisant une fibre optique très multimodale et pompée par des impulsions de forte énergie, on peut avantageusement obtenir un supercontinuum de photons fortement cohérent spatialement sur le mode fondamental et dans les domaines visible et infrarouge, avec un spectre continu.

Le dispositif selon l'invention peut comporter d'autres caractéristiques qui peuvent être prises séparément ou en combinaison, et notamment :
- la relocalisation de l'énergie de pompe des photons primaires peut être contrôlée par au moins un paramètre qui est choisi parmi (au moins) une modification du couplage de l'énergie dans la fibre optique, un profil de variation d'indice du cœur de la fibre optique, et d'une polarisation du faisceau d'entrée;
   ➢ ses moyens de mise en forme peuvent être agencés pour agir sur les photons primaires de sorte que le faisceau d'entrée soit couplé de façon plus ou moins divergente dans le cœur de la fibre optique ;
   ➢ ses moyens de mise en forme peuvent être agencés pour agir sur les photons primaires de sorte que le faisceau d'entrée puisse avoir une polarisation linéaire ou elliptique ;
   ➢ sa/chaque fibre optique peut comprendre un cœur ayant un profil de variation d'indice choisi parmi (au moins) un profil parabolique, un profil gaussien, un profil super gaussien, un profil triangulaire, un profil lorentzien, un profil multi-lobes, un profil de sécante hyperbolique carrée et un profil rectangulaire ;
- les conversions de longueurs d'onde peuvent être choisies parmi (au moins) une conversion par auto-modulation de phase, une conversion par modulation de phase croisée, une conversion par effet Raman, une conversion par effet solitonique, et une conversion par mélange paramétrique ;
- sa/chaque fibre optique peut être dopée en ions. Dans ce cas, il peut également comprendre une source laser auxiliaire propre à injecter dans la/chaque fibre optique des photons auxiliaires qui sont destinés à interagir avec les ions pour induire une augmentation de la conversion vers les photons secondaires ;
- sa/chaque fibre optique peut présenter un marquage longitudinal périodique propre à induire une amélioration de la relocalisation de l'énergie de pompe des photons primaires ;
- sa/chaque fibre optique peut présenter un diamètre à évolution adiabatique ;
- sa/chaque fibre optique peut être de type dit « à maintien de polarisation » ;
- sa/chaque fibre optique peut présenter une géométrie transverse choisie parmi (au moins) une géométrie circulaire, une géométrie rectangulaire, et une géométrie hexagonale ;
- sa/chaque fibre optique peut être contrainte mécaniquement de manière à favoriser la relocalisation de l'énergie de pompe des photons primaires ;
- sa/chaque fibre optique peut présenter au moins vingt modes ;
- il peut comprendre plusieurs (au moins deux) fibres optiques ;
- sa source laser impulsionnelle peut être propre à délivrer les photons primaires dans des impulsions ayant une durée comprise entre quelques centièmes de nanosecondes et quelques dizaines de nanosecondes ;
- il peut comprendre une cavité résonnante comportant, d'une part, un miroir d'entrée semi-réfléchissant, propre à recevoir le faisceau d'entrée, et auquel est solidarisée une entrée de la/chaque fibre optique, et, d'autre part, un miroir de sortie semi-réfléchissant et propre à délivrer le faisceau de sortie ;
- la relocalisation de l'énergie de pompe des photons primaires par effet non linéaire peut être avantageusement réalisée dans un mode élevé, de type LP11 ou supérieur.

L'invention propose également un système d'analyse d'échantillon comprenant au moins un dispositif de génération du type de celui présenté ci-avant et propre à fournir un faisceau de sortie polychromatique pour analyser l'échantillon.

Par exemple, un tel système peut être propre à effectuer une analyse de l'échantillon par diffusion Raman antistokes cohérente multiplex (ou CARS (« Coherent AntiStokes Raman Scattering »)).

Egalement par exemple, un tel système peut être propre à effectuer une analyse de l'échantillon par fluorescence linéaire et fluorescence non linéaire.

### Brève description des figures

D'autres caractéristiques et avantages de l'invention apparaîtront à l'examen de la description détaillée ci-après, et des dessins annexés, sur lesquels :
- la figure 1 illustre de façon schématique et fonctionnelle un premier exemple de réalisation d'un dispositif de génération selon l'invention,
- la figure 2 illustre de façon schématique au sein d'un diagramme un exemple d'évolution de la puissance (P en dB) du faisceau d'entrée d'un dispositif de génération selon l'invention en fonction de la longueur d'onde (λ en nm),
- la figure 3 illustre de façon schématique au sein d'un diagramme un exemple d'évolution, en fonction de la longueur d'onde (λ en nm), de la puissance (P en dB) du faisceau de sortie d'un dispositif de génération selon l'invention, ayant comme faisceau d'entrée celui dont le diagramme d'évolution est illustré sur la figure 2,
- la figure 4 illustre de façon schématique et fonctionnelle un deuxième exemple de réalisation d'un dispositif de génération selon l'invention,
- la figure 5 illustre de façon schématique et fonctionnelle un troisième exemple de réalisation d'un dispositif de génération selon l'invention, et
- les figures 6A et 6B illustrent de façon schématique respectivement des exemples de focalisation et de défocalisation du faisceau d'entrée dans un cœur de fibre optique, et
- la figure 7 illustre de façon schématique le résultat de deux types de nettoyage du faisceau d'entrée.

### Description détaillée d'exemples de réalisation

L'invention a notamment pour but de proposer un dispositif DG destiné à générer un faisceau de sortie FS quasi monomode de forte brillance et dans lequel les photons présentent des longueurs d'onde définissant un (super)continuum sensiblement continu.

Dans ce qui suit, on considère à titre d'exemple non limitatif que le dispositif de génération DG est destiné à faire partie d'un système d'analyse d'échantillon (éventuellement de type médical). Mais l'invention n'est pas limitée à ce type de système. En effet, elle concerne tout système devant comprendre au moins un dispositif pouvant générer un faisceau de photons polychromatique.

Par ailleurs, on considère dans ce qui suit, à titre d'exemple non limitatif, que le système d'analyse est propre à effectuer des analyses d'échantillons par diffusion Raman antistokes cohérente multiplex (ou micro-spectroscopie CARS multiplex (« Coherent AntiStokes Raman Scattering »)). De tels échantillons peuvent, par exemple, être sanguins. Mais l'invention n'est pas limitée à ce type d'analyse. Ainsi, elle concerne également, par exemple, les analyses d'échantillons par fluorescence linéaire et fluorescence non linéaire.

D'une manière générale, l'invention concerne de nombreux domaines, et notamment la biophotonique (et en particulier le diagnostic cellulaire), la tomographie cohérente, la cytométrie en flux, le dépistage d'éléments chimiques à distance (par exemple pour la sécurité aérienne), le contrôle de personnes (par exemple dans le domaine médical), la détection d'explosifs et la détection de bactéries.

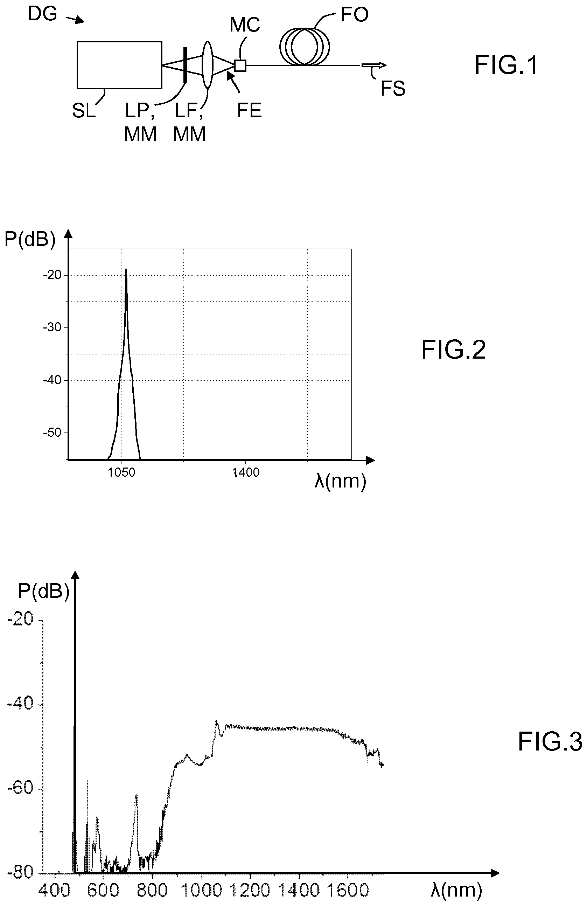

On a schématiquement représenté sur les figures 1, 4 et 5 trois exemples de réalisation non limitatifs d'un dispositif de génération DG selon l'invention.

Comme illustré, un dispositif (de génération) DG, selon l'invention, comprend au moins une source laser impulsionnelle SL, des moyens de mise en forme MM, et au moins une fibre optique FO de type multimode.

La source laser impulsionnelle (ou laser de pompe) SL est propre à délivrer des photons dits « primaires » qui présentent au moins une longueur d'onde ci-après dite « primaire » (ou de pompe). Cette longueur d'onde primaire (ou de pompe) est choisie en fonction des besoins applicatifs, et donc de la bande spectrale désirée. Par conséquent, elle pourra appartenir au domaine de l'infrarouge (ou IR), du visible ou de l'ultraviolet (ou UV). Ces photons primaires peuvent également appartenir à plusieurs domaines comme par exemple une longueur d'onde infrarouge et sa seconde harmonique.

De plus, la source laser impulsionnelle SL est propre à délivrer les photons primaires dans des impulsions qui ont une forte énergie (ou puissance crête) de pompe. De préférence, cette puissance crête est supérieure à 30 kW, ce qui correspond à une intensité supérieure à 5 GW/cm².

Par exemple, cette source laser impulsionnelle SL peut comprendre un laser de type Nd : YAG produisant des photons de 1064 nm avec des impulsions allant de 10 ps à 50 ns. Mais elle pourrait également comprendre un microlaser ou un laser à modes synchronisés ou encore un laser à commutation de gain, par exemple.

Dans les trois exemples illustrés non limitativement sur les figures 1, 4 et 5, le dispositif (de génération) DG ne comprend qu'une seule source laser impulsionnelle SL produisant le faisceau d'entrée FE. Mais il pourrait en comporter plusieurs (au moins deux), différentes entre elles mais pas nécessairement cohérentes entre elles.

Les moyens de mise en forme MM sont propres à agir sur les photons primaires pour délivrer un faisceau d'entrée FE, qui peut être focalisé ou divergeant. Par exemple, les moyens de mise en forme MM peuvent être agencés pour agir sur les photons primaires de sorte que le faisceau d'entrée FE soit couplé de façon plus ou moins divergente dans le cœur de la fibre optique FO.

De préférence, ces moyens de mise en forme MM sont également agencés pour agir sur les photons primaires de sorte que le faisceau d'entrée FE ait une polarisation (ou direction d'oscillation du champ) choisie. Cette dernière est de préférence linéaire. Mais elle pourrait également être circulaire ou elliptique. On notera que la source laser (impulsionnelle) SL délivre un faisceau qui est déjà polarisé et donc cette dernière peut être tournée, ou modifiée, avec une lame demi-onde ou une lame quart-d'onde à l'extérieur de sa cavité laser afin de favoriser certains effets non linéaires. L'orientation/modification de la polarisation vis-à-vis de la fibre optique FO permet donc de modifier (modérément) le spectre final. La modification de la divergence du faisceau de pompe en entrée permet de coupler les photons primaires en excitant un plus ou moins grand nombre de modes.

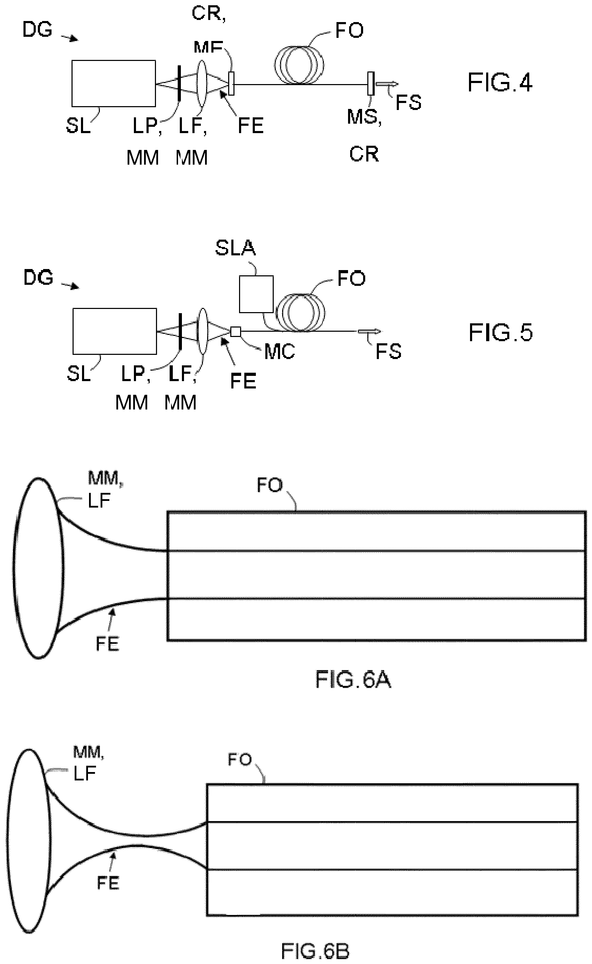

Dans les trois exemples illustrés non limitativement sur les figures 1, 4 et 5, les moyens de mise en forme MM comprennent, en aval de la source laser impulsionnelle SL par rapport au sens de propagation des photons primaires, une lame d'onde LP propre à conférer une polarisation choisie (par exemple linéaire) aux photons primaires et une lentille de focalisation LF propre à coupler les photons primaires dans la fibre optique FO par effet de focalisation ou de défocalisation afin d'exciter un nombre plus ou moins important de modes. On a schématiquement illustré sur les figures 6A et 6B respectivement des exemples de focalisation et de défocalisation du faisceau d'entrée FE dans un cœur de fibre optique FO. On notera que la lame d'onde LP pourrait être placée après la lentille de focalisation LF.

La/chaque fibre optique FO est très multimodale, ce qui signifie qu'elle présente au moins dix modes, et de préférence au moins vingt modes, et entre lesquels est initialement répartie l'énergie de pompe des photons primaires du faisceau d'entrée FE. On notera que l'un de ces modes est dit fondamental.

On notera que dans les trois exemples illustrés non limitativement sur les figures 1, 4 et 5, le dispositif DG ne comprend qu'une seule fibre optique FO. Mais elle pourrait en comprendre plusieurs (au moins deux).

La/chaque fibre optique FO est propre à recevoir le faisceau d'entrée FE et est agencée pour produire un faisceau de sortie FS polychromatique, comprenant des photons dits « secondaires » présentant plusieurs longueurs d'onde, à partir du faisceau d'entrée FE. Par exemple, et comme illustré non limitativement, l'extrémité d'entrée de la fibre optique FO peut être solidarisée fixement à des moyens de couplage MC recevant sur une entrée le faisceau d'entrée FE. Ces moyens de couplage MC peuvent, par exemple, être agencés sous la forme d'un coupleur à microlentille chargé de refocaliser plus précisément (ou éventuellement de défocaliser) le faisceau d'entrée FE dans le cœur de l'extrémité d'entrée de la fibre optique FO.

La/chaque fibre optique FO peut, par exemple, être réalisée en silice ou en un autre matériau comme par exemple le tellure, les chalcogénures, ou les verres fluorés, et peut être éventuellement dopée. Elle peut, par exemple, être de type SF50 OM2 ou de type 50/125 à gradient d'indice.

La/chaque fibre optique FO est propre à relocaliser l'énergie de pompe (répartie entre ses différents modes) par effet non linéaire dans son mode fondamental, avant de générer des photons dits « secondaires » présentant différentes longueurs d'onde par conversions de longueurs d'onde à partir de la longueur d'onde (primaire ou de pompe) des photons primaires qui sont dans le mode fondamental du fait de la relocalisation.

On notera que lorsque les photons primaires ont plusieurs longueurs d'onde, ils se « relocalisent » tous dans le mode fondamental.

Les photons primaires (de pompe) sont couplés dans la fibre optique FO de manière à exciter le plus grand nombre de ses modes. L'énergie de pompe (des photons primaires) est alors suffisamment élevée pour induire sa relocalisation (ou son transfert) dans un unique mode, celui dit fondamental. C'est ce que l'on appelle parfois un « nettoyage spatial ».

Ce transfert (ou cette relocalisation) de l'énergie de pompe est contrôlé(e) par au moins un paramètre qui est choisi parmi au moins une modification de couplage d'énergie dans la fibre optique FO, le profil de variation d'indice du cœur de la fibre optique FO, et l'éventuelle polarisation du faisceau d'entrée FE.

De préférence, les trois paramètres précités contrôlent le transfert (ou la relocalisation). Dans ce cas, il est préférable, comme évoqué précédemment, que le faisceau d'entrée FE ait une polarisation linéaire. De même, dans ce cas, il est préférable que le cœur de la fibre optique FO ait un profil de variation d'indice choisi parmi au moins un profil parabolique, un profil gaussien, un profil super gaussien (par exemple résultant de trous), un profil triangulaire, un profil lorentzien, un profil multi-lobes, un profil de sécante hyperbolique carrée et un profil rectangulaire.

Ce nettoyage spatial par relocalisation apparait grâce à l'influence d'un effet non linéaire (et plus précisément l'effet kerr) qui sert de précurseur au transfert d'énergie entre les différents modes de la fibre optique FO. Il en résulte une amélioration importante de la brillance du faisceau de sortie FS.

Ensuite, toute l'énergie des photons primaires, qui a été relocalisée dans le mode fondamental, est utilisée pour élargir le spectre vers le domaine infrarouge ou visible par conversions de longueurs d'onde résultant d'au moins un effet non linéaire.

De préférence, ces conversions de longueurs d'onde sont choisies parmi au moins une conversion par auto-modulation de phase, une conversion par modulation de phase croisée, une conversion par effet Raman, une conversion par effet solitonique, et une conversion par mélange paramétrique. Pour ce qui concerne la conversion par cascades Raman, il est avantageux que l'énergie de pompe induise une saturation du gain Raman, car cela permet de rendre plat le spectre de sortie sur le plan de l'énergie, en régime de dispersion normale.

Sur la figure 2 se trouve illustré un exemple d'évolution, en fonction de la longueur d'onde λ (en nm), de la puissance (en dB) du faisceau d'entrée FE du dispositif DG. Ici, la source laser SL génère des photons primaires dont la longueur d'onde (de pompe) est égale à 1064 nm.

Sur la figure 3 se trouve illustré un exemple d'évolution, en fonction de la longueur d'onde λ (en nm), de la puissance (en dB) du faisceau de sortie FS du dispositif DG lorsque son faisceau d'entrée FE présente le diagramme d'évolution illustré sur la figure 2. Comme on peut l'observer, on obtient ici un spectre sensiblement continu sur environ 800 nm, et de surcroît particulièrement plat sur le plan énergétique sur presque 400 nm. Un tel spectre est bien adapté à de nombreuses applications, et en particulier à la micro-spectroscopie CARS multiplex.

Une explication plus détaillée des mécanismes permettant d'expliquer l'obtention d'un faisceau de sortie FS polychromatique de façon sensiblement continue est donnée ci-après.

Dans un premier temps, les photons primaires (de pompe) constituent une onde laser, monomode spatial, (ici) monochromatique longitudinalement et de forte puissance, qui est couplée dans la fibre optique FO multimode. Lors de la propagation dans les premiers centimètres de la fibre optique FO, le profil spatial de cette onde laser est modifié afin de devenir légèrement multimode sous l'effet des différences de vitesse de groupe entre les différents modes.

Le couplage linéaire entre ces modes permet d'obtenir une image (point chaud) périodique tout au long de la propagation dans la fibre optique FO. Cette périodicité dépend des constantes de propagation des modes en interaction.

Par l'intermédiaire de la forte puissance, cette image périodique permet une modulation périodique de l'indice du cœur de la fibre optique FO (par effet Kerr), qui fournit alors un accord de phase entre les modes (c'est ce que l'on appelle un mélange à quatre ondes). Cet accord de phase permet alors un transfert de l'énergie des différents modes vers celui qui possède la vitesse la plus faible, à savoir le mode fondamental.

Dans un second temps, du fait de sa forte énergie (résultant du transfert) ce mode fondamental se désolidarise des autres modes sous l'effet de l'auto-modulation de phase, ce qui stoppe le processus de transfert énergétique et emprisonne définitivement l'énergie sur cet unique mode fondamental. On a alors une relocalisation spatiale de l'énergie des photons primaires sur le mode fondamental.

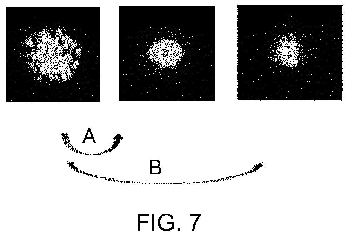

Selon une variante de l'invention, il est à noter que la relocalisation de l'énergie de pompe des photons primaires par effet non linéaire peut être réalisée dans un mode élevé, de type LP11 ou supérieur. La figure 7 illustre les deux types de « nettoyage » du faisceau d'entrée : le nettoyage du mode fondamental (flèche A), et le nettoyage du mode d'ordre élevé L11 (flèche B).

Ensuite, sous l'effet des mécanismes de conversion en longueur d'onde qui sont présents dans la fibre (l'automodulation de phase et/ou la modulation de phase croisée et/ou l'effet Raman et/ou les effets solitoniques et/ou les mélanges paramétriques), la longueur d'onde des photons primaires de cet unique mode fondamental transverse est convertie vers d'autres longueurs d'onde, également dans ce mode fondamental. En d'autres termes, on obtient un supercontinuum de lumière sur un mode spatial unique.

On notera que la source laser SL peut être propre à délivrer les photons primaires dans des impulsions qui ont une durée comprise entre quelques centièmes de nanosecondes et quelques dizaines de nanosecondes. Ces durées d'impulsions préférentielles sont destinées à se placer dans un régime de propagation permettant de négliger les effets de séparation temporelle entre les différents modes entre lesquels est répartie l'énergie de pompe (la durée de l'impulsion doit alors être supérieure à la différence de temps de groupe entre les modes). Pour des durées plus courtes les effets de dispersion deviennent gênants, et pour des durées plus longues on a du mal à avoir une forte puissance crête pour les impulsions.

On notera également, comme illustré non limitativement dans le deuxième exemple de la figure 4, que le dispositif DG peut également comprendre une cavité résonnante CR logeant sa/chaque fibre optique FO. Cette cavité résonnante CR permet une oscillation des photons secondaires propre à induire une amplification des conversions de longueurs d'onde non linéaires. Cette cavité résonnante CR est préférentiellement utilisée avec des impulsions primaires longues. Une telle cavité résonnante CR peut comprendre, d'une part, un miroir d'entrée ME semi-réfléchissant, propre à recevoir le faisceau d'entrée FE et, par exemple, auquel est solidarisée l'entrée de la/chaque fibre optique FO, et, d'autre part, un miroir de sortie MS semi-réfléchissant, par exemple auquel est solidarisée la sortie de la fibre optique FO, et propre à délivrer le faisceau de sortie FS.

On notera également que la/chaque fibre optique FO peut être dopée en ions. Dans ce cas, et comme illustré non limitativement dans le troisième exemple de la figure 5, le dispositif DG peut également comprendre une source laser auxiliaire SLA propre à injecter dans la fibre optique FO des photons auxiliaires destinés à interagir avec les ions pour induire une augmentation de la conversion vers les photons secondaires.

Par exemple, la/chaque fibre optique FO peut être dopée en ions de terre rare, et notamment du néodyme, de l'ytterbium, du praséodyme, de l'holmium, de l'erbium ou du thulium. A titre d'exemple, la longueur d'onde d'émission de la source laser auxiliaire SLA peut être égale à 980 nm pour des ions ytterbium (Yb) et erbium (Er), ou à 808 nm pour des ions néodyme (Nd).

En variante, la/chaque fibre optique FO peut être dopée avec d'autres types d'ions, comme par exemple le germanium ou le chrome.

On notera également que la/chaque fibre optique FO peut présenter un marquage longitudinal périodique propre à induire une amélioration de la relocalisation de l'énergie de pompe des photons primaires. Ce marquage peut être réalisé par le battement de deux longueurs d'onde monochromatiques (on parle alors de « poling optique »), mais aussi par l'illumination répétée d'un laser UV modifiant localement l'indice du cœur de la silice.

On notera également que la/chaque fibre optique FO peut présenter un diamètre à évolution adiabatique. Cet effet de rétrécissement du cœur de la fibre optique FO a pour objectif de filtrer les modes d'ordres élevés et ainsi d'améliorer le nettoyage du faisceau.

On notera également que la/chaque fibre optique FO peut être de type dit « à maintien de polarisation ». En effet, une modification de l'état de polarisation peut diminuer l'efficacité de conversion non linéaire vers d'autres longueurs d'onde.

On notera également que la/chaque fibre optique FO peut présenter une géométrie transverse choisie parmi au moins une géométrie circulaire, une géométrie rectangulaire, et une géométrie hexagonale. Cette géométrie permet de modifier les constantes de propagation des modes et de générer plus ou moins d'effets non linéaires du type mélanges à quatre ondes modal.

On notera également que la/chaque fibre optique FO peut être contrainte mécaniquement afin de favoriser la relocalisation de l'énergie de pompe des photons primaires. Pour ce faire, la/chaque fibre optique FO peut, par exemple, être enroulée sur un dispositif permettant d'induire sur elle (passivement ou activement) des contraintes mécaniques destinées à briser l'orthogonalité entre ses différents modes et ainsi favoriser la mise en place de la relocalisation spatiale. Cela peut, par exemple, être un mandrin mécanique sur lequel est enroulée une fibre optique FO. La modification du diamètre du mandrin se traduit par une contrainte mécanique en étirement sur la fibre optique FO.

On notera également que l'on peut envisager d'utiliser plusieurs fibres optiques FO, les unes à la suite des autres, et présentant éventuellement des caractéristiques différentes. Cela permet d'adapter, par exemple, la transparence du matériau lors de l'élargissement progressif du spectre. A titre d'exemple, on peut utiliser une fibre optique en silice pour une extension jusqu'à 2,4 µm, puis une fibre optique en verre fluoré pour atteindre 5 µm. Cela permet aussi d'adapter la non linéarité du matériau tout au long de la propagation.

L'invention offre plusieurs avantages, parmi lesquels :
- elle permet d'obtenir un (super-)continuum sensiblement continu et avec une forte densité spectrale de puissance,
- elle permet d'améliorer la cohérence du rayonnement large bande qui est généralement détériorée par les propagations multimodales.

## Revendications

1. Dispositif (DG) de génération d'un faisceau de photons polychromatique, ledit dispositif (DG) comprenant
- au moins une source laser impulsionnelle (SL) propre à délivrer des photons primaires présentant au moins une longueur d'onde dans un unique mode spatial,
- des moyens de mise en forme (MM) propres à agir sur lesdits photons primaires pour délivrer un faisceau d'entrée (FE),
- et au moins une fibre optique (FO) agencée et adaptée pour produire un faisceau de sortie (FS) polychromatique comprenant des photons secondaires présentant plusieurs longueurs d'onde à partir dudit faisceau d'entrée (FE), ladite fibre optique (FO) présentant au moins dix modes, dont un dit fondamental et entre lesquels est initialement répartie ladite énergie de pompe des photons primaires, ladite fibre étant adaptée pour relocaliser ladite énergie de pompe des photons primaires par effet Kerr dans ledit mode fondamental, avant de générer lesdits photons secondaires de différentes longueurs d'onde par conversion de longueurs d'onde à partir de ladite longueur d'onde des photons primaires dans ledit mode fondamental, et pour que lesdits photons primaires soient convertis en photons secondaires dans ledit mode fondamental,
ladite fibre optique (FO) présentant une variation périodique longitudinale de l'indice de cœur propre à induire ladite relocalisation de l'énergie de pompe des photons primaires.

2. Dispositif selon la revendication 1, **caractérisé en ce que** ladite relocalisation de l'énergie de pompe des photons primaires est contrôlée par au moins un paramètre choisi dans un groupe comprenant une modification de couplage d'énergie dans ladite fibre optique (FO), un profil de variation d'indice d'un cœur de ladite fibre optique (FO), et une polarisation dudit faisceau d'entrée (FE).

3. Dispositif selon la revendication 2, **caractérisé en ce que** lesdits moyens de mise en forme (MM) sont agencés pour agir sur lesdits photons primaires de sorte que ledit faisceau d'entrée (FE) soit couplé de façon divergente dans ledit cœur de la fibre optique (FO).

4. Dispositif selon l'une des revendications 2 et 3, **caractérisé en ce que** lesdits moyens de mise en forme (MM) sont agencés pour agir sur lesdits photons primaires de sorte que ledit faisceau d'entrée (FE) ait une polarisation linéaire ou elliptique.

5. Dispositif selon l'une des revendications 2 à 4, **caractérisé en ce que** ladite fibre optique (FO) comprend un cœur ayant un profil de variation d'indice choisi dans un groupe comprenant un profil parabolique, un profil gaussien, un profil super gaussien, un profil triangulaire, un profil lorentzien, un profil multi-lobes, un profil de sécante hyperbolique carrée, et un profil rectangulaire.

6. Dispositif selon l'une des revendications 1 à 5, **caractérisé en ce que** lesdites conversions de longueurs d'onde sont choisies dans un groupe comprenant une conversion par auto-modulation de phase, une conversion par modulation de phase croisée, une conversion par effet Raman, une conversion par effet solitonique, et une conversion par mélange paramétrique.

7. Dispositif selon l'une des revendications 1 à 6, **caractérisé en ce que** ladite fibre optique (FO) est dopée en ions, et **en ce qu'**il comprend une source laser auxiliaire (SLA) propre à injecter dans ladite fibre optique (FO) des photons auxiliaires destinés à interagir avec lesdits ions pour induire une augmentation de la conversion vers lesdits photons secondaires.

8. Dispositif selon l'une des revendications 1 à 7, **caractérisé en ce que** ladite fibre optique (FO) présente un diamètre à évolution adiabatique.

9. Dispositif selon l'une des revendications 1 à 8, **caractérisé en ce que** ladite fibre optique (FO) est de type dit « à maintien de polarisation ».

10. Dispositif selon l'une des revendications 1 à 9, **caractérisé en ce que** ladite fibre optique (FO) présente une géométrie transverse choisie dans un groupe comprenant une géométrie circulaire, une géométrie rectangulaire, et une géométrie hexagonale.

11. Dispositif selon l'une des revendications 1 à 10, **caractérisé en ce que** ladite fibre optique (FO) est contrainte mécaniquement de manière à favoriser ladite relocalisation de l'énergie de pompe des photons primaires.

12. Dispositif selon l'une des revendications 1 à 11, **caractérisé en ce que** ladite fibre optique (FO) présente au moins vingt modes.

13. Dispositif selon l'une des revendications 1 à 12, **caractérisé en ce qu'**il comprend plusieurs fibres optiques (FO).

14. Dispositif selon l'une des revendications 1 à 13, **caractérisé en ce que** ladite source laser impulsionnelle (SL) est propre à délivrer lesdits photons primaires dans des impulsions ayant une durée comprise entre quelques centièmes de nanosecondes et quelques dizaines de nanosecondes.

15. Dispositif selon l'une des revendications 1 à 14, **caractérisé en ce qu'**il comprend une cavité résonnante (CR) comportant i) un miroir d'entrée (ME) semi-réfléchissant, propre à recevoir ledit faisceau d'entrée (FE), et auquel est solidarisée une entrée de ladite fibre optique (FO), et ii) un miroir de sortie (MS) semi-réfléchissant et propre à délivrer ledit faisceau de sortie (FS).

16. Système d'analyse d'échantillon, **caractérisé en ce qu'**il comprend au moins un dispositif de génération (DG) selon l'une des revendications précédentes, propre à fournir un faisceau de sortie (FS) polychromatique pour analyser ledit échantillon.

17. Système selon la revendication 16, **caractérisé en ce qu'**il est propre à effectuer une analyse dudit échantillon par diffusion Raman antistokes cohérente multiplex.

18. Système selon la revendication 17, **caractérisé en ce qu'**il est propre à effectuer une analyse dudit échantillon par fluorescence linéaire et fluorescence non linéaire.

## Patentansprüche

1. Vorrichtung (DG) zur Erzeugung eines polychromatischen Photonenstrahls, wobei die Vorrichtung (DG) Folgendes umfasst:
- mindestens eine Impuls-Laserquelle (SL), welche geeignet ist, primäre Photonen abzugeben, welche mindestens eine Wellenlänge in einem einzigen räumlichen Modus aufweisen,
- Mittel zum Informbringen (MM), welche geeignet sind, auf die primären Photonen einzuwirken, um einen Eingangsstrahl (FE) abzugeben,
- und mindestens eine optische Faser (FO), welche angeordnet und geeignet ist, um aus dem Eingangsstrahl (FE) einen polychromatischen Ausgangsstrahl (FS) zu erzeugen, welcher sekundäre Photonen umfasst, welche mehrere Wellenlängen aufweisen, wobei die optische Faser (FO) mindestens zehn Modi aufweist, darunter einen fundamentalen Modus genannten Modus, und zwischen welchen die Pumpenenergie der primären Photonen anfänglich verteilt ist, wobei die Faser geeignet ist, um die Pumpenenergie der primären Photonen durch einen Kerr-Effekt in dem fundamentalen Modus neu zu lokalisieren, vor dem Erzeugen der sekundären Photonen unterschiedlicher Wellenlängen durch Umwandlung von Wellenlängen anhand der Wellenlänge der primären Photonen in dem fundamentalen Modus, und damit die primären Photonen in sekundäre Photonen in dem fundamentalen Modus umgewandelt werden,
wobei die optische Faser (FO) eine periodische Längsvariation des Kernindizes aufweist, welche geeignet ist, die Neulokalisierung der Pumpenenergie der primären Photonen zu induzieren.

2. Vorrichtung nach Anspruch 1, **dadurch gekennzeichnet, dass** die Neulokalisierung der Pumpenenergie der primären Photonen durch mindestens einen Parameter gesteuert wird, gewählt aus einer Gruppe, umfassend eine Modifizierung der Energiekopplung in der optischen Faser (FO), ein Variationsprofil des Indizes eines Kerns der optischen Faser (FO) und eine Polarisation des Eingangsstrahls (FE).

3. Vorrichtung nach Anspruch 2, **dadurch gekennzeichnet, dass** die Mittel zum Informbringen (MM) angeordnet sind, um auf die primären Photonen so einzuwirken, dass der Eingangsstrahl (FE) divergierend in dem Kern der optischen Faser (FO) gekoppelt wird.

4. Vorrichtung nach einem der Ansprüche 2 und 3, **dadurch gekennzeichnet, dass** die Mittel zum Informbringen (MM) angeordnet sind, um auf die primären Photonen so einzuwirken, dass der Eingangsstrahl (FE) eine lineare oder elliptische Polarisation aufweist.

5. Vorrichtung nach einem der Ansprüche 2 bis 4, **dadurch gekennzeichnet, dass** die optische Faser (FO) einen Kern umfasst, welcher ein Index-Variationsprofil aufweist, gewählt aus einer Gruppe, umfassend ein Parabelprofil, ein gauß'sches Profil, ein super-gauß'sches Profil, ein Dreiecksprofil, ein Lorentz'sches Profil, ein Profil mit mehreren Keulen, ein Profil mit hyperbolischer quadratischer Sekante und ein rechteckiges Profil.

6. Vorrichtung nach einem der Ansprüche 1 bis 5, **dadurch gekennzeichnet, dass** die Umwandlungen von Wellenlängen aus einer Gruppe gewählt sind, umfassend eine Umwandlung durch Selbstphasenmodulation, eine Umwandlung durch Kreuzphasenmodulation, eine Umwandlung durch Raman-Effekt, eine Umwandlung durch Soliton-Effekt und eine Umwandlung durch parametrische Mischung.

7. Vorrichtung nach einem der Ansprüche 1 bis 6, **dadurch gekennzeichnet, dass** die optische Faser (FO) mit Ionen dotiert ist, und dadurch, dass sie eine Hilfs-Laserquelle (SLA) umfasst, welche geeignet ist, in die optische Faser (FO) Hilfsphotonen einzuspeisen, welche dazu bestimmt sind, mit den Ionen zu interagieren, um eine Erhöhung der Umwandlung in die sekundären Photonen zu induzieren.

8. Vorrichtung nach einem der Ansprüche 1 bis 7, **dadurch gekennzeichnet, dass** die optische Faser (FO) einen Durchmesser mit adiabatischem Verlauf aufweist.

9. Vorrichtung nach einem der Ansprüche 1 bis 8, **dadurch gekennzeichnet, dass** die optische Faser (FO) eine Faser vom Typ « mit Polarisationserhalt » ist.

10. Vorrichtung nach einem der Ansprüche 1 bis 9, **dadurch gekennzeichnet, dass** die optische Faser (FO) eine Quergeometrie aufweist, gewählt aus einer Gruppe, umfassend eine kreisförmige Geometrie, eine rechteckige Geometrie und eine sechseckige Geometrie.

11. Vorrichtung nach einem der Ansprüche 1 bis 10, **dadurch gekennzeichnet, dass** die optische Faser (FO) mechanisch unter Spannung gesetzt wird, um die Neulokalisierung der Pumpenenergie der primären Photonen zu begünstigen.

12. Vorrichtung nach einem der Ansprüche 1 bis 11, **dadurch gekennzeichnet, dass** die optische Faser (FO) mindestens zwanzig Modi aufweist.

13. Vorrichtung nach einem der Ansprüche 1 bis 12, **dadurch gekennzeichnet, dass** sie mehrere optische Fasern (FO) umfasst.

14. Vorrichtung nach einem der Ansprüche 1 bis 13, **dadurch gekennzeichnet, dass** die Impuls-Laserquelle (SL) geeignet ist, primäre Photonen in Impulsen abzugeben, welche eine Dauer zwischen einigen Hundertstel-Nanosekunden und einigen Zehntel-Nanosekunden aufweisen.

15. Vorrichtung nach einem der Ansprüche 1 bis 14, **dadurch gekennzeichnet, dass** sie einen Resonanzhohlraum (CR) umfasst, welcher i) einen halbreflektierenden Eingangsspiegel (ME) umfasst, welcher geeignet ist, den Eingangsstrahl (FE) aufzunehmen, und mit welchem ein Eingang der optischen Faser (FO) fest verbunden ist, und ii) einen halbreflektierenden Ausgangsspiegel (MS), welcher geeignet ist, den Ausgangsstrahl (FS) abzugeben.

16. Probenanalysesystem, **dadurch gekennzeichnet, dass** es mindestens eine Erzeugungsvorrichtung (DG) nach einem der vorhergehenden Ansprüche umfasst, welche geeignet ist, einen polychromatischen Ausgangsstrahl (FS) zum Analysieren der Probe bereitzustellen.

17. System nach Anspruch 16, **dadurch gekennzeichnet, dass** es geeignet ist, eine Analyse der Probe durch kohärente anti-stokes Raman-Multiplex-Streuung vorzunehmen.

18. System nach Anspruch 17, **dadurch gekennzeichnet, dass** es geeignet ist, eine Analyse der Probe durch lineare Fluoreszenz und nicht-lineare Fluoreszenz vorzunehmen.

## Claims

1. A device (DG) for generating a polychromatic beam of photons, said device (DG) comprising
- at least one pulsed laser source (SL) that is able to deliver primary photons having at least one wavelength in a single spatial mode,
- shaping means (MM) that are able to act on said primary photons to deliver an input beam (FE),
- and at least one optical fibre (FO) that is arranged and adapted to produce, from said input beam (FE), a polychromatic output beam (FS) containing secondary photons having multiple wavelengths, said optical fibre (FO) having at least ten modes, one of which is called a fundamental mode, and between which modes said pump energy of the primary photons is initially distributed, said fibre being adapted to relocate said pump energy of the primary photons via a Kerr effect into said fundamental mode, before generating said secondary photons of various wavelengths by wavelength conversion from said wavelength of the primary photons in said fundamental mode, and for said primary photons to be converted into secondary photons in said fundamental mode,
said optical fibre (FO) having a longitudinal periodic variation of the core index able to induce said relocation of the pump energy of the primary photons.

2. The device according to claim 1, **characterised in that** said relocation of the pump energy of the primary photons is controlled by at least one parameter chosen from a group comprising an energy coupling modification in said optical fibre (FO), an index variation profile of a core of said optical fibre (FO), and a polarization of said input beam (FE).

3. The device according to claim 2, **characterised in that** said shaping means (MM) are arranged to act on said primary photons so that said input beam (FE) is divergently coupled in said core of the optical fibre (FO).

4. The device according to one of claims 2 and 3, **characterised in that** said shaping means (MM) are arranged to act on said primary photons so that said input beam (FE) has a linear or elliptical polarization.

5. The device according to one of claims 2 to 4, **characterised in that** said optical fibre (FO) comprises a core having an index variation profile chosen from a group comprising a parabolic profile, a Gaussian profile, a super-Gaussian profile, a triangular profile, a Lorentzian profile, a multi-lobe profile, a squared-hyperbolic-secant profile, and a rectangular profile.

6. The device according to one of claims 1 to 5, **characterised in that** said wavelength conversions are chosen from a group comprising a conversion by self-phase modulation, a conversion by cross-phase modulation, a conversion by Raman effect, a conversion by soliton effect, and a conversion by parametric mixing.

7. The device according to one of claims 1 to 6, **characterised in that** said optical fibre (FO) is doped with ions, and **in that** it comprises an auxiliary laser source (SLA) that is able to inject, into said optical fibre (FO), auxiliary photons that are intended to interact with said ions to induce an increase in the conversion into said secondary photons.

8. The device according to one of claims 1 to 7, **characterised in that** said optical fibre (FO) has an adiabatic evolving diameter.

9. The device according to one of claims 1 to 8, **characterised in that** said optical fibre (FO) is a so-called "polarization-maintaining" optical fibre.

10. The device according to one of claims 1 to 9, **characterised in that** said optical fibre (FO) has a transverse geometry chosen from a group comprising a circular geometry, a rectangular geometry, and a hexagonal geometry.

11. The device according to one of claims 1 to 10, **characterised in that** said optical fibre (FO) is mechanically stressed so as to promote said relocation of the pump energy of the primary photons.

12. The device according to one of claims 1 to 11, **characterised in that** said optical fibre (FO) has at least twenty modes.

13. The device according to one of claims 1 to 12, **characterised in that** it comprises multiple optical fibres (FO).

14. The device according to one of claims 1 to 13, **characterised in that** said pulsed laser source (SL) is able to deliver said primary photons in pulses having a duration comprised between a few hundredths of nanoseconds and a few tenths of nanoseconds.

15. The device according to one of claims 1 to 14, **characterised in that** it comprises a resonant cavity (CR) having i) a semi-reflective entrance mirror (ME) able to receive said input beam (FE), and to which an entrance of said optical fibre (FO) is fastened, and ii) a semi-reflective exit mirror (MS) that is able to deliver said output beam (FS).

16. A system for analysing samples, **characterised in that** it comprises at least one generating device (DG) according to one of the preceding claims, able to deliver a polychromatic output beam (FS) to analyse said sample.

17. The system according to claim 16, **characterised in that** it is able to carry out an analysis of said sample by multiplex coherent anti-Stokes Raman scattering.

18. The system according to claim 17, **characterised in that** it is able to carry out an analysis of said sample by linear fluorescence and non-linear fluorescence.
